# EUROPEAN PATENT SPECIFICATION

(11) **EP 0 321 120 B1**
(45) Date of publication and mention of the grant of the patent: **19.01.1994**
(21) Application number: 88311341.7
(22) Date of filing: 30.11.1988
(51) Int. Cl.: F16M 11/12, F16M 13/02

(54) **Clamp fixture**
Klemmvorrichtung
Dispositif de fixation

(30) Priority: 04.12.1987 US 128744
(43) Date of publication of application: 21.06.1989
(73) Proprietor: IVAC CORPORATION, San Diego, California 92121-1570 (US)
(72) Inventor: Gorton, Lanny A., Sunland California 91040 (US); Schmidt, Gerald W., Ventura California 93003 (US)
(74) Representative: Rees, David Christopher

(56) References cited:
- DE-A- 3 432 405
- DE-U- 8 500 205
- GB-A- 622 704
- GB-A- 1 037 575
- GB-A- 2 042 056
- US-A- 4 211 380
- US-A- 4 598 345
- US-A- 4 696 450
- US-A- 4 702 448
- Schalitz, A., Kupplungsatlas, Ludwigsburg, 1975, p. 200, Fig. 10.2-21

## Description

This invention relates generally to clamp-type mounting devices for example for supporting fragile medical instruments with respect to a conveniently available support surface or structure. More particularly, this invention relates to a clamp fixture adapted for stable connection to a variety of different supported structures, with an adjustment capability to permit the medical instrument to be supported in a selected orientation.

In the medical arts, a wide variety of relatively sophisticated medical instruments including electronic devices and the like are available and are used frequently during the course of patient treatment. For example, in a hospital or medical clinic environment, a variety of electronic instruments may be required to monitor selected parameters indicative of patient condition, or to deliver selected fluids to the patient in accordance with a prescribed time schedule, or to perform a variety of other important functions in patient diagnosis or treatment. When use of such devices is desired or required, the appropriate instrument is normally transported from a storage site to the patient location, such as the patient's bedside in a hospital, and is there appropriately coupled to or otherwise operated in conjunction with the patient to perform the desired functions.

In recent years, advances in the electronic arts particularly with respect to solid state technology have permitted many such medical instruments to be constructed with a relatively small, preferably hand-held size for optimum portability and minimum obstruction of the bedside location or the like.

The relatively small size of many modern electronic medical instruments and the like necessitates the use of some type of clamping or locking device to prevent the instrument from being knocked about or otherwise inadvertently moved during instrument operation. With such a clamping or locking device, the instrument can be retained in the desired close proximity with the patient in a manner minimising any risk of disrupting electrical or fluid flow lines coupled between the instrument and the patient. In addition, the clamping or locking device functions to retain the instrument in a predetermined orientation which may be required for proper instrument operation, or for easy viewing of any parameters displayed by the instrument, or for ease of adjustment of instrument controls etc.

In the past, clamping or locking devices used to support relatively small medical instruments and the like have generally been designed to lock onto a specific type of support structure. For example, many spring-loaded and screw-down type clamps have been proposed for securely locking onto a vertical pole of the type used commonly to support intravenous (IV) fluid infusion equipment. Other types of clamps have been designed to lock onto other specific surfaces, such as the edge of a horizontal tabletop. However, these prior clamp devices generally have not provided satisfactory instrument anchoring or proper instrument orientation when the clamp device is locked onto an alternative support structure which differs from the one for which it was specifically designed. Accordingly, hospitals and the like have been required to obtain different types of clamping devices designed to lock onto different support structures, or, alternatively, to provide the same type of support structure such as an upright IV pole each time the particular instrument is used.

There exists, therefore, a significant need for an improved clamping device for use in securely supporting and orienting a medical instrument or the like, the clamping device being adapted to lock securely onto a variety of different support structures commonly present in a medical environment, and to permit the orientation of the supported medical instrument to be adjusted as desired to a selected position. It is an object of the invention to provide such a device.

According to the invention, there is provided a clamp fixture for supporting an instrument in a selected orientation relative to a selected support structure, comprising: a base bracket including means for locking onto a selected support structure extending generally along a first axis; a U-shaped frame member mounted at the base of the U on to the base bracket for rotation with respect to the base bracket about a second axis generally perpendicular to the first axis; means for connecting the arms of the frame member to the instrument to permit rotation of the instrument with respect to the arms about a third axis at an angle to the first and second axes; first releasable lock means for locking the frame member against rotation about the second axis relative to the base bracket; second releasable lock means for locking the instrument supported by the arms against rotation about the third axis; the base bracket having an inner bracket support surface and an adjustable clamp screw movable towards and away from the inner bracket support surface for respectively clamping and releasing the support structure relative to the inner bracket support surface characterised in that the second lock means lock the instrument on a selected one of a plurality of preselected angular positions relative to the arms; and means are provided for preventing the unauthorised removal of the base bracket from the support structure, the said means comprising an adjustment knob rotatably supported by the base bracket and a clutch arrangement interconnecting the adjustment knob and the clamp screw whereby the clamp screw is movable towards and away from the inner bracket support surface by manual rotation of the adjustment knob.

Preferably the base bracket bracket has a generally U-shaped configuration defining an axial channel extending along the first axis, the inner bracket support surface preferably including surface portions of different configuration for respectively engaging support structures of different geometry.

Preferably, a first surface portion, defines an elongate, generally semi-cylindrical recess extending generally in parallel to the first axis, and a second surface portion defines a pair of relatively flat platforms on either side of the recess and optionally a resilient liner is located over the first and second surface portions.

In a preferred embodiment, the base bracket includes a central support leg, the frame member being rotatably supported from the central support leg, and a primary support leg oriented at an angle of about sixty degrees relative to the central support leg, a clamp screw being supported by the base bracket for movement towards and away from the primary support leg at an angle of about ninety degrees to the primary support leg.

Preferably, the clutch arrangement is adjustable to vary the maximum torque transfer between the adjustment knob and clamp screw preferably by means of a non-standard adjustment tool.

In a preferred embodiment the clutch arrangement comprises a spring plate carried by the adjustment knob, a cap member carried by the clamp screw and having at least one recessed seat, a drive ball urged by the spring plate into the recessed seat and an adjustment screw carried by the adjustment knob in bearing engagement with the spring member, a specialised adjustment tool being engageable with the adjustment screw to vary the spring force applied to the drive ball by the spring plate.

Preferably the clamp screw includes an inboard end presented generally towards the inner bracket support surface and a resilient shield covering the clamp screw inboard end.

Preferably, the first releasable lock means includes means for releasably locking the frame member relative to the base bracket at rotational intervals of about ninety degrees, the first releasable lock means optionally comprising a spring-loaded lock pin carried by the base bracket, a plurality of recesses formed in the frame member, each recess being positioned to receive the lock pin when suitably aligned, and a trigger lever on the base bracket connected to the lock pin for manually retracting the lock pin from the aligned recess to permit rotation of the frame member relative to the base bracket.

Preferably, the second releasable lock means comprises a detent mechanism for releasably supporting the instrument in one of a number of angular positions relative to the or each frame arm, the detent mechanism optionally comprising an index disc mounted on the or each frame arm and defining a generally circular array of recessed detents, and a mounting shoe engaging the or each frame arm generally along the third axis and arranged to be connected to the instrument, the mounting shoe supporting a detent ball for removable reception into one of the recessed detents in the index discs, the detent ball optionally being biased outwards from the mounting shoe.

In the preferred embodiment there are a pair of frame arms, each having connecting means for engaging a respective side of the instrument, and each having second releasable lock means releasably locking the instrument relative to the respective frame arms. Thus, in a preferred form of clamp fixture, the base bracket includes clamp means for locking onto the selected support structure, the clamp means including a clutch mechanism to prevent application of clamping forces to the support structure beyond a predetermined limit. The base bracket includes surface means for securely engaging and supporting different support structures of different geometry. The first releasable lock means comprises a spring-loaded lock pin on the base bracket for reception into a selected one of a plurality of recesses formed in the frame member, and a manually retractable trigger lever for manually retracting the lock pin from the frame member. The second releasable lock means comprises a detent mechanism cooperating between the frame arm and the instrument. The clamp fixture also includes a mounting shoe adapted for connection to the instrument the detent mechanism cooperating between the frame arm and the mounting shoe.

The invention also extends to a clamp fixture for supporting an instrument or the like in a selected orientation relative to a selected support structure, the, the clamp fixing comprising a generally U-shaped base bracket of open-sided construction defining an axially open channel extending generally along a first axis, the base bracket including a primary support leg having a first inner support surface defined by an elongate and generally semi-cylindrical recess oriented generally parallel to the first axis, and a second surface defined by a pair of relatively flat platforms on the opposite sides of the recess; a clamp screw carried by the base bracket for movement towards and away from the support leg for respectively locking onto and releasing the selected support structure; an adjustment knob carried by the base bracket; a clutch mechanism connected between the adjustment knob and the clamp screw; a generally U-shaped frame member having a central frame bar and a pair of generally parallel frame arms; pivot means for rotatably connecting the central frame bar of the frame member to the base bracket for rotation of the frame member about a second axis oriented generally perpendicular to the first axis; first releasable lock means for releasably locking the frame member against rotation about the second axis in a selected position of rotational adjustment; and detent means carried by the pair of frame arms adapted for connection coaxially to the instrument to permit rotation of the instrument relative to the frame arms about a third axis oriented generally perpendicular to the first and second axes, the detent means including second releasable lock means for releasably locking the instrument against rotation about the third axis in a selected position of angular adjustment.

In accordance with the invention, an improved clamp fixture is provided for use in supporting a medical instrument or the like with respect to a selected available support structure, and in a selected orientation for ease of instrument use and access. The clamp fixture is designed to lock in a secure and stable manner onto a variety of different horizontally or vertically oriented or other support structures, and then to undergo appropriate adjustment to position a supported medical instrument or the like in the desired orientation.

In a preferred form of the invention, the clamp fixture comprises a base bracket having a contoured, approximately U-shaped geometry to receive the selected support structure. The base bracket defines a plurality of inner bracket support surfaces of different geometry for stable engagement of different support structures. At least one of the inner bracket support surfaces defines an elongate recess of curved part-cylindrical geometry for fitting closely against an upright pole of generally circular cross section, whereas at least one other inner bracket support surface defines a relatively flat surface for fitting snugly against a horizontal tabletop surface or the like. A clamp screw carried by the base bracket is advanced by rotation of an adjustment knob for clamping the selected support structure firmly against the appropriate inner bracket support surface. A clutch mechanism is coupled between the adjustment knob and the clamp screw to prevent application of excessive clamping forces to the support structure. The clutch mechanism is adapted for adjustment by means of a specialised tool to permit selection of the clamping force to be applied to the support structure, and, if desired, to reduce torque transmission between the adjustment knob and the clamp screw after support structure engagement to prevent unauthorised removal or theft of the clamp fixture.

The preferred base bracket rotatably supports a frame member to permit adjustment in the orientation of the frame member in accordance with the particular support structure to which the base bracket is attached. In the preferred form, the frame member comprises a generally U-shaped component having a central frame bar supported on the base bracket for rotation about an axis generally perpendicular to a primary axis of the support structure engaged by and extending through the base bracket. A spring-loaded lock pin carried on the base bracket is releasably engaged with the frame member to lock the frame member releasably in one of several rotational positions, such as at ninety degree intervals relative to the base bracket.

The frame member in turn supports at least one frame arm adapted for connection to the selected medical instrument for supporting the instrument in one of a plurality of rotational positions. In the preferred form, the medical instrument is releasably locked in the selected rotational position relative to a rotational axis oriented generally perpendicular to the frame member rotational axis and the primary axis of the support structure engaged by the base bracket. Accordingly, irrespective of the orientation of the support structure engaged by the base bracket, the combination of rotational adjustments of the medical instrument relative to the frame arm and the frame member relative to the base bracket permits the medical instrument to be supported in substantially any desired orientation.

With the generally U-shaped frame member, a pair of generally parallel frame arms are located at opposite ends of the central frame bar for coaxial attachment to opposite sides of the medical instrument. Appropriate fasteners such as screws are fastened through the frame arms into a respective pair of mounting shoes which are secured in turn to the medical instrument. A detent lock mechanism includes index discs mounted at the inboard sides of the frame arms and including inwardly presented recessed detents in annular arrays. These recessed detents on the index disc are positioned to receive detent balls on the mounting shoes, whereby the mounting shoes can be releasably rotated along with the medical instrument to a selected one of a plurality of rotational positions by shifting the detent balls to engage different detents formed in the index discs.

The invention may be carried into practice in various ways and one embodiment will be described by way of example with reference to the accompanying drawings, in which:
Figure 1 is a perspective view illustrating a clamp fixture in accordance with the invention, shown mounted onto an upright support pole;
Figure 2 is a top plan view of the clamp fixture of Figure 1;
Figure 3 is an enlarged partial vertical section taken generally on the line 3-3 of Figure 2;
Figure 4 is a further enlarged partial vertical section taken generally on the line 4-4 of Figure 3;
Figure 5 is an enlarged partial vertical section taken generally on the line 5-5 of Figure 2
Figure 6 is an enlarged partial horizontal section taken generally on the line 6-6 of Figure 2;
Figure 7 is an enlarged partial vertical section taken generally on the line 7-7 of Figure 2;
Figure 8 is an enlarged partial vertical section taken generally on the line 8-8 of Figure 2;
Figure 9 is an enlarged partial vertical section taken generally on the line 9-9 of Figure 2; and
Figure 10 is a side elevation showing the clamp fixture in an alternative mounting position.

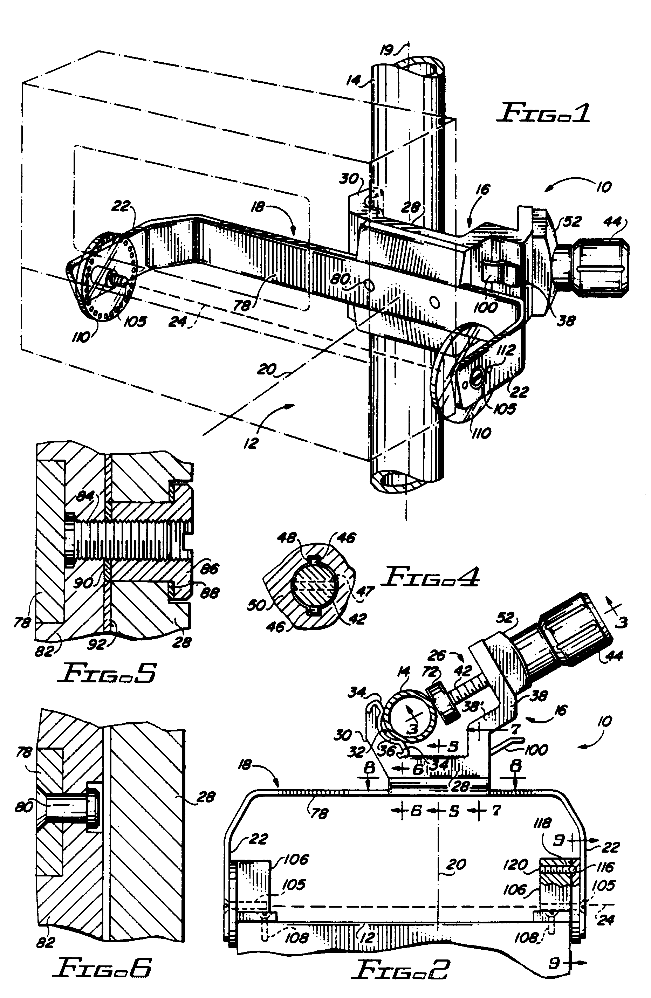

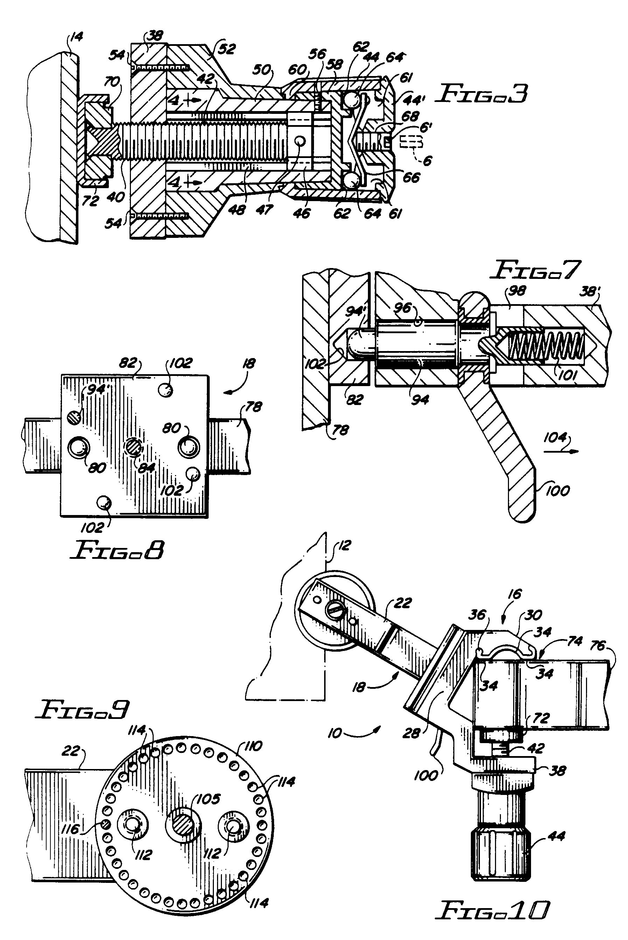

A clamp fixture referred to generally by the reference numeral 10 is provided for use in supporting a selected medical instrument 12 (Figures 1 and 2) in a secure and stable manner. The clamp fixture 10 is designed as an essentially universal clamping device for locking onto a variety of different types of support structures, such as an upright pole 14 as shown in Figure 1, while permitting positional adjustment of the supported medical instrument 12 to a selected orientation.

The clamp fixture 10 is designed primarily for use in supporting the medical instrument 12 in a stable selected orientation in close proximity with a patient (not shown) associated with the instrument. Although the clamp fixture 10 shown is intended primarily to support an insulin infusion pump of the type used to deliver scheduled insulin doses to a diabetic patient, it will be understood that the clamp fixture can be used to support many other types of medical and non medical instruments and accessories which will typically include electronic components. The clamp fixture provides a stable base locked onto an available support structure which may differ in type and physical orientation when the instrument is moved from one location to another for use. The clamp fixture accommodates attachment to such different support structures by including multiple adjustment features for reorientation of the medical instrument to the desired optimum position chosen, for example for proper instrument operation, easy visibility of parameters displayed by the instrument, and/or access to instrument control components.

The clamp fixture 10 comprises a base bracket 16 adapted to lock onto the selected support structure such as the standard vertical pole 14 used to support intravenous (IV) fluid infusion equipment. A frame member 18 is rotatably connected to the base bracket 16 for rotation about an axis 20 oriented generally perpendicular to the central axis 19 of the upright pole 14, and this frame member 18 in turn includes a pair of frame arms 22 equipped with means for rotatably supporting the medical instrument 12 relative to an axis 24 which is perpendicular to the base bracket axis 20 and the pole axis 19. Releasable lock means are provided, as will be described, for securing the frame member 18 to the base bracket 16, and for securing the instrument 12 to the frame arms 22. Accordingly, irrespective of the orientation of the support structure to which the base bracket 16 is attached, the frame member 18 and the frame arms 22 can accommodate orientation of the medical instrument 12 in substantially any desired position.

The base bracket is generally U-shaped defining an axially open internal channel 26 extending in a direction generally parallel to the vertical axis 19 of the pole 14. The channel 26 is open-sided to enable it to receive the pole 14 or other support structure into the channel 26. The base bracket 16 includes a number of inner surfaces with different contours to fit snugly and firmly against different types of support structures. The preferred base bracket configuration includes a central bracket leg 28 joined at one end to a primary support leg 30 which is included, for example, at an angle of about sixty degrees, to the plane of the central leg 28. This primary support leg 30 has an inner surface defining an axially elongate recess 32 of generally part-cylindrical cross section, flanked on both sides by generally flat platforms 34. A resilient liner 36 of a plastics material or the like is provided as an overlay for the recess 32 and adjoining platforms 34 to prevent scratching of an engaged support structure.

The base bracket 16 also includes a secondary support leg 38 which is joined to the opposite end of the central bracket leg 28 by a short extension leg member 38. This secondary support leg 38 is angularly set at a position generally in parallel with the primary support leg 30 and includes a threaded bore 40 (Figure 3) through which a threaded clamp screw 42 extends. An adjustment knob 44 mounted on the leg 38 is manually rotatable to advance or retract the clamp screw 42 respectively towards and away from the primary support leg 30 in order to clamp the selected support structure against the primary support leg 30.

The adjustment knob 44 and its connection to the clamp screw 42 are shown in more detail in Figures 3 and 4. The clamp screw 42 extends through the threaded bore 40 to the outboard side of the secondary support leg 38. At the outboard end, the clamp screw 43 carries a radially enlarged drive key 46 secured to it by a press-fit pin 47. This drive key 46 projects radially beyond the outer diameter of the clamp screw 42 to extend into a diametrically opposed pair of longitudinal slots 48 formed in the inner surface of a drive sleeve 50. The support leg end of the drive sleeve 50 is radially enlarged to provide a thrust component held axially against the outboard side of the secondary support leg 38 by an outer housing 52 of generally complementary shape. Screws 54 are fastened through the leg 38 into the housing 52 to hold the housing in place. The drive sleeve 50 is keyed by a pin 56 for rotation with a driven cap 58 mounted on its outboard end. The adjustment knob 44 is supported in turn for rotation about the driven cap 58, with a thrust ring 60 on the knob 44 being captured between the axially facing ends of the housing 52 and the driven cap 58 to prevent significant axial movement of the knob 44.

Rotational movement of the adjustment knob 44 is coupled via a clutch mechanism to the driven cap 58 for rotating the clamp screw 42. More specifically, an end plate 44′ and the driven cap 58 define axially facing pairs of recessed seats 61 and 62 for receiving a corresponding pair of drive balls 64. A spring plate 66 within the end plate 44′ urges the drive balls 64 partially from the end plate seats 61 for reception in the seats 62 in the driven cap 58. In this position, the drive balls 64 are engaged between the side edges of the pairs of seats 61 and 62 to transmit rotary motion from the adjustment knob 44 to the driven cap 58 and so to the clamp screw 42. However, in the event of rotational forces exceeding the biasing effect of the spring plate 66, the drive balls 64 will ride axially into the end plate seats 61 and so will disengage from the driven cap 58. Accordingly, excessive turning torques cannot be applied to the clamp screw 42. A set screw 68 is provided in the end plate 44 bearing against the centre of the spring plate 66 for adjusting the spring plate force applied to the drive balls 64.

The clamp screw 68 includes a recessed socket or head 69 of any suitable specialised non-standard cross sectional shape, such as a triangular shape or the like, for receiving the end of a specialised adjustment tool 67. This permits the set screw 68 to be advanced axially towards the spring plate 66 to increase the torque transmission between the knob 44 and the clamp screw 42, thereby allowing a greater clamping force to be applied to an engaged support structure. Alternatively, the set screw 68 can be retracted axially in a direction away from the spring plate 66 to reduce the spring force urging the drive balls 64 into the driven cap seats 62, thereby decreasing torque transmission to the clamp screw 42. In this regard, the specialised tool 67 can be used to adjust the set screw 68 for a high clamping force to permit secure clamping engagement with a support structure, followed by set screw readjustment for insufficient torque transmission to retract the clamp screw 42 from the support structure. This technique, using the specialised adjustment tool 67, prevents unauthorised removal of the clamp fixture 10 from the support structure, to prevent loss or theft of the clamp fixture.

Accordingly, rotation of the adjustment knob 44 is effective to advance the inboard end of the clamp screw 42 into engagement with a support structure within the base bracket channel 26. For ease of operation, the inboard end of the clamp screw is fastened by staking or the like to a cylindrical base ring 70 which is rotatable relative to the clamp screw. A plastic shield 72 is mounted by press-fitting onto the base ring 70 to prevent scratching of the engaged support surface. In the case of the upright pole 14 shown in Figure 1, advancing of the clamp screw 42 against the pole 14 causes the pole 14 to be firmly seated in a locked position within the semi-cylindrical recess 32 of the primary support leg 30. In this configuration, the pole 14 extends axially through the channel 26. Alternatively, the base bracket 16 can be locked onto other support structures such as the edge 74 of a tabletop 76 as shown in Figure 10, with the clamp screw 42 seating the tabletop securely against the flat platforms 34 of the primary support leg 30. Other support structures may be engaged by the base bracket 16 and appropriately clamped between the clamp screw 42 and the primary support leg 30.

The frame member 18 comprises a generally U-shaped component including a central frame bar 78 pivotally connected to the base bracket 16 and a pair of parallel, outwardly projecting frame arms 22. As shown in Figures 1 and 6, this central frame bar 78 is fastened by rivets 80 or the like to a generally rectangular pivot plate 82. In turn, the pivot plate 82 is rotatably supported by a pivot pin 84 (Figure 5) fastened into the central bracket leg 28 of the base bracket 16 to permit rotation of the entire frame member 18 about the rotational axis 20. While this pivot connection may take various forms, Figure 5 shows a threaded pivot pin 84 fastened into the threaded bore of a bushing nut 86 supported by the base bracket. The bushing nut 86, has a radially enlarged inboard end which acts as a thrust member when the pivot pin 84 is connected to it. A wave spring washer 88 is provided to effectively lock the pin 84 and busing nut 86 against relative rotation during rotation of the frame member 18. Moreover, if desired, a small wear ring 90 of a suitable low friction material can be located between the axially outboard end of the bushing nut 86 and the pivot plate 82, and a larger annular wear pad 92 of a plastics material or the like can be placed between the bracket leg 28 and the pivot plate 82.

A spring-loaded lock pin 94 (Figures 7 and 8) is carried by the base bracket 16 to provide a releasable lock for locking the pivot plate 82 and frame member 18 against rotation relative to the base bracket 16. However, the lock pin 94 can be retracted quickly and easily by a simple manual operation to permit rotation of the pivot plate 82 and the frame member 18 to a new rotational position relative to the base bracket. Accordingly, when the base bracket 16 is locked onto a selected available support structure, the frame member 18 can be reoriented as desired to a new adjustment position.

As shown best in Figure 7, the spring-loaded lock pin 94 is mounted within a shallow bore 96 formed in the extension leg member 38 of the base bracket support leg 38. This bore 96 is interrupted generally at a midlength position by a laterally open window 98 within which a trigger lever 100 is connected to the lock pin 94. A biasing spring 101 within the base of the bore 96 normally urges the lock pin 94 and the trigger lever 100 in a forward direction such so that an end tip 94′ on the lock pin 94 seats within an aligned shallow recess 102 formed in the inboard end of the pivot plate 82. The engagement of the lock pin in a pivot plate recess 102 effectively locks the entire frame member against rotation relative to the base bracket.

When adjustment of the frame member 18 to a new rotational position is desired, the trigger lever 100 can be retracted quickly and easily by rearward fingertip pressure in the direction of arrow 104 in Figure 7. This withdraws the end tip 94′ of the lock pin 94 from the pivot plate recess 102 to permit the frame member to be rotated freely to a new position of rotational adjustment. When the selected new adjustment position is reached, the trigger lever 100 is allowed to return by action of the biasing spring 101 and the end tip 94′ is seated into a new pivot plate recess 102 aligned therewith. In this regard, in the preferred from of the invention (Figure 8), four recesses 102 are provided to permit the frame member to be located at ninety degree intervals. Alternatively, any number of such recesses can be provided for appropriately locking the frame member 18 at other rotational positions, as desired.

The frame arms 22 are adapted for connection generally to the opposite sides of the supported medical instrument 12, and to this end, they include coaxially aligned ports which house mounting screws 105 extending towards each other along the rotational axis 24 (Figures 1 and 2). The mounting screws 105 are fastened into a corresponding pair of mounting shoes 106 which are connected in turn by screws 108 or the like to the selected instrument 12. The mounting shoes 106 are fastened to a rear face of the instrument 12 at the outside corners of the instrument housing, although it will be understood that the mounting shoes may be attached directly to the outboard sides of the instrument housing, or to any other convenient portions of the instrument housing.

The frame arms 22 further include a respective pair of index discs 110 which cooperate with the mounting shoes 106 to provide a detent lock mechanism for securely locking the instrument in a selected angular position relative to the axis 24. These index discs 110 are mounted coaxially on the frame arms 22 by small fasteners 112 or the like at the inboard sides of the frame arms. Each index disc 110 includes a generally circular array or recessed detents 114 at close angular intervals,(eg about fifteen degree intervals) oriented coaxially with respect to the axis 24. The detents 114 are positioned to receive an associated respective pair of detent balls 116 (Figures 2 and 9) on the associated mounting shoes 106 for releasably locking the mounting shoes 106 in a selected angular position relative to the index disc 110 and frame arms 22. In the preferred form, these detent balls 116 are formed from a plastics material and are biased by a small spring 118 to protrude outwards from the mounting shoes with a selected spring biasing force. An adjustment screw 120 is provided for adjusting the spring force applied to the detent balls 116.

Accordingly, the clamp fixture of the present invention is can be securely mounted onto a variety of different support structures. The base bracket 16 is designed for quickly and easily locking firmly onto a selected support structure within a range of different sizes and shapes and physical orientations. Once the base bracket is locked into place, the frame member 18 is adjustable quickly and easily relative to the axis 20. Similarly, the instrument 12 is adjustable quickly and easily relative to the axis 24. This combination of adjustments with respect to the two perpendicular axes 20 and 24, both of which are oriented orthogonally to a primary axis of the support structure engaged by the base bracket, permit the instrument to be oriented in substantially any desired position for ease of operation, visibility and access. Alternatively, if desired, the clamp fixture 10 can be used to stabilise an instrument placed without clamping onto a flat support surface, in which case the fixture provides an extended structure protruding rearwardly from the instrument. Moreover, in use, the clamp fixture may be used to support various other medical or non-medical items in addition to the supported instrument.

## Claims

1. A clamp fixture for supporting an instrument (12) in a selected orientation relative to a selected support structure, comprising: a base bracket (16) including means for locking onto a selected support structure (14) extending generally along a first axis (19); a U-shaped frame member (18) mounted at the base of the U on to the base bracket (16) for rotation with respect to the base bracket (16) about a second axis (20) generally perpendicular to the first axis (19); means for connecting (100) the arms (22) of the frame member (18) to the instrument (12) to permit rotation of the instrument (12) with respect to the arms (22) about a third axis (24) at an angle to the first (19) and second (20) axes; first releasable lock means (94) for locking the frame member (18) against rotation about the second axis (20) relative to the base bracket (16); second releasable lock means (116) for locking the instrument (12) supported by the arms (22) against rotation about the third axis (24); the base bracket (16) having an inner bracket support surface (32,34) and an adjustable clamp screw (42) movable towards and away from the inner bracket support surface (32,34) for respectively clamping and releasing the support structure (14) relative to the inner bracket support surface (32,34) characterised in that the second lock means (116) lock the instrument (12) on a selected one of a plurality of preselected angular positions relative to the arms (22); and means (64,66) are provided for preventing the unauthorised removal of the base bracket (16) from the support structure, the said means (64,66) comprising an adjustment knob (44) rotatably supported by the base bracket (16) and a clutch arrangement (64,66) interconnecting the adjustment knob (44) and the clamp screw (42) whereby the clamp screw (42) is movable towards and away from the inner bracket support surface (32,34) by manual rotation of the adjustment knob (44).

2. A clamp fixture as claimed in Claim 1, characterised in that the base bracket (16) has a generally U-shaped configuration defining an axial channel (26) extending along the first axis (19), the inner bracket support surface (32,34) for respectively clamping and releasing the support structure (14) relative to the inner bracket support surface (32,34), the inner bracket support surface including surface portions of different configuration for respectively engaging support structures of different geometry.

3. A clamp fixture as claimed in Claim 2, characterised in that a first surface portion defines an elongate, generally semi-cylindrical recess (32) extending generally in parallel to the first axis (19), and a second surface portion defines a pair of relatively flat platforms (34) on either side of the recess (32), and optionally a resilient liner (36) is located over the first and second surface portions.

4. A clamp fixture as claimed in Claim 1, characterised in that the base bracket (16) includes a central support leg (28), the frame member (18) being rotatable supported from the central support leg (28), and a primary support leg (30) oriented at an angle of about sixty degrees relative to the central support leg (28), a clamp screw (42) being supported by the base bracket (16) for movement towards and away from the primary support leg (30) at an angle of about ninety degrees to the primary support leg (30).

5. A clamp fixture as claimed in any preceding Claim, characterised in that the clutch arrangement is adjustable to vary the maximum torque transfer between the adjustment knob (44) and clamp screw (42), preferably by means of a non-standard adjustment tool (67).

6. A clamp fixture as claimed in Claim 5, characterised in that the clutch arrangement comprises a spring plate (66) carried by the adjustment knob (44), a cap member (58) carried by the clamp screw (42) and having at least one recessed seat (62), a drive ball (64) urged by the spring plate (66) into the recessed seat (62), and an adjustment screw (68) carried by the adjustment knob (44) in bearing engagement with the spring member (66), a specialised adjustment tool (67) being engageable with the adjustment screw (68) to vary the spring force applied to the drive ball (64) by the spring plate (66).

7. A clamp fixture as claimed in any preceding of Claim, characterised in that the clamp screw (42) includes an inboard end (70) presented generally towards the inner bracket support surface (32,34) and a resilient shield (72) covering the clamp screw inboard end (70).

8. A clamp fixture as claimed in any preceding Claim, characterised in that the first releasable lock means includes means (94,102) for releasably locking the frame member (18) relative to the base bracket at rotational intervals of about ninety degrees, the first releasable lock means optionally comprising a spring-loaded lock pin (94) carried by the base bracket (16), a plurality of recesses (102) formed in the frame member (18), each recess (102) being positioned to receive the lock pin (94) when suitably aligned, and a trigger lever (100) on the base bracket (16) connected to the lock pin (94) for manually retracting the lock pin (94) from the aligned recess (102) to permit rotation of the frame member (18) relative to the base bracket (16).

9. A clamp fixture as claimed in any preceding Claim characterised in that the second releasable lock means comprising a detent mechanism for releasably supporting the instrument (12) in the selected angular position, the detent mechanism optionally comprising an index disc (110) mounted on the or each frame arm (22) and defining a generally circular array of recessed detents (114), and a mounting shoe (106) engaging the or each frame arm (122) generally along the third axis (24) and arranged to be connected to the instrument (12), the mounting shoe (106) supporting a detent ball (116) for removable reception into one of the recessed detents (114) in the index disc (110), the detent ball (116) optionally being biased outwards from the mounting shoe (106).

10. A clamp fixture as claimed in Claim 9, characterised in that each of the arms (22) includes the mounting shoe (106) for engaging a respective side of the instrument, and the second releasable lock means (116) releasably locking the instrument (12) relative to the respective arm (22).

## Patentansprüche

1. Klemmbefestigung zur Halterung eines Geräts (12) in einer gewählten Richtung bezüglich einer gewählten Halterungsstruktur, welche aufweist:
- eine Basisklammer (16) mit Vorrichtungen zum Fixieren an einer gewählten Halterungsstruktur (14), die sich im allgemeinen entlang einer ersten Achse (19) erstreckt;
- ein U-förmiges Rahmenelement (18), das an der Basis des Us an der Basisklammer (16) befestigt ist, so daß es bezüglich der Basisklammer (16) um eine zur ersten Achse (19) im allgemeinen senkrechte zweite Achse (20) drehbar ist;
- Vorrichtungen (100) zum Verbinden der Arme (22) des Rahmenelements (18) mit dem Gerät (12), so daß das Gerät (12) bezüglich der Arme (22) um eine dritte Achse (24) in einem Winkel zur ersten (19) und zweiten Achse (20) drehbar ist;
- erste lösbare Sperrvorrichtungen (94) zum Sperren des Rahmenelements (18) gegen Drehung um die zweite Achse (20) bezüglich der Basisklammer (16);
- zweite lösbare Sperrvorrichtungen (116) zum Sperren des von den Armen (22) gehaltenen Geräts (12) gegen Drehung um die dritte Achse (24);
- wobei die Basisklammer (16) eine innere Klammerstützfläche (32, 34) und eine einstellbare Klemmschraube (42), die auf die innere Klammerstützfläche (32, 34) zu und von ihr weg bewegt werden kann, um die Halterungsstruktur (14) bezüglich der inneren Klammerstützfläche (32, 34) festzuklemmen bzw. zu lösen, aufweist,
**dadurch gekennzeichnet, daß**
- die zweite Sperrvorrichtung (116) das Gerät (12) in einer aus einer Vielzahl von vorgewählten Winkelpositionen bezüglich der Arme (22) ausgewählten Position versperrt; und
- Vorrichtungen (64, 66) vorgesehen sind, um das unzulässige Entfernen der Basisklammer (16) von der Halterungsstruktur zu verhindern, wobei die Vorrichtungen (64, 66) einen Einstellknopf (44), der durch die Basisklammer (16) drehbar gehalten wird, und eine Kupplungsanordnung (64, 66), die den Einstellknopf (44) und die Klemmschraube (42) miteinander verbinden, aufweisen, wodurch die Klemmschraube (42) durch Drehen des Einstellknopfes (44) von Hand auf die innere Klammerstützfläche (32, 34) zu und von ihr weg bewegt werden kann.

2. Klemmbefestigung nach Anspruch 1, **dadurch gekennzeichnet, daß** die Basisklammer (16) einen im allgemeinen U-förmigen Aufbau hat, der einen axialen Kanal (26) definiert, der sich entlang der ersten Achse (19) erstreckt, wobei die innere Klammerstützfläche (32, 34) zum Festhalten bzw. Loslösen der Halterungsstruktur (14) bezüglich der inneren Klammerstützfläche (32, 34) Oberflächenbereiche unterschiedlicher Gestaltung enthält, um jeweils Halterungsstrukturen unterschiedlicher Geometrie festzulegen.

3. Klemmbefestigung nach Anspruch 2, **dadurch gekennzeichnet, daß** ein erster Oberflächenbereich eine langgestreckte, im allgemeinen halb-zylindrische Ausnehmung (32), die sich im allgemeinen parallel zu der ersten Achse (19) erstreckt, definiert und daß ein zweiter Oberflächenbereich ein Paar verhältnismäßig ebener Plateauelemente (34) auf jeder Seite der Ausnehmung (32) definiert und daß sich ggf. eine elastische Einlage (36) über dem ersten und zweiten Oberflächenbereich befindet.

4. Klemmbefestigung nach Anspruch 1, **dadurch gekennzeichnet, daß** die Basisklammer (16) einen zentralen Stützschenkel (28), wobei das Rahmenelement (18) von dem zentralen Stützschenkel drehbar gestützt wird, und einen Primärstützschenkel (30), der in einem Winkel von etwa 60° zum zentralen Stützschenkel (28) ausgerichtet ist, umfaßt, wobei eine Klemmschraube (42) für eine Bewegung auf den Primärstützschenkel (30) zu und von ihm weg in einem Winkel von etwa 90° zum Primärstützschenkel (30) von der Basisklammer (16) gehalten wird.

5. Klemmbefestigung nach einem der vorhergehenden Ansprüche, **dadurch gekennzeichnet, daß** die Kupplungsanordnung zur Änderung der maximalen Drehmomentsübertragung zwischen dem Einstellknopf (44) und der Klemmschraube (42) vorzugsweise mit einem nicht standardisierten Einstellwerkzeug (67) einstellbar ist.

6. Klemmbefestigung nach Anspruch 5, **dadurch gekennzeichnet, daß** die Kupplungsanordnung eine von dem Einstellknopf (44) getragene Federplatte (66), ein von der Klemmschraube (42) getragenes und wenigstens ein ausgespartes Auflageteil (62) aufweisendes Kappenteil (58), eine von der Federplatte (66) in das ausgesparte Auflageteil (62) hineingepreßte Mitnahmekugel (64) und eine Einstellschraube (68), die von dem Einstellknopf (44) anliegend an der Federplatte (66) getragen wird, umfaßt, wobei ein Spezialeinstellwerkzeug (67) mit der Einstellschraube (68) in Eingriff kommen kann, um die von der Federplatte (66) auf die Mitnahmekugel (64) ausgeübte Federkraft verändern zu können.

7. Klemmbefestigung nach einem der vorhergehenden Ansprüche, **dadurch gekennzeichnet, daß** die Klemmschraube (42) ein innenseitiges Ende (70), das im allgemeinen auf die innere Klammerstützfläche (32, 34) gerichtet ist, und ein elastisches Schutzelement (72), das das innenseitige Klemmschraubenende (70) bedeckt, aufweist.

8. Klemmbefestigung nach einem der vorhergehenden Ansprüche, **dadurch gekennzeichnet, daß** die erste lösbare Sperrvorrichtung die Vorrichtungen (94, 102) zur loslösbaren Sperrung des Rahmenelements (18) bezüglich der Basisklammer in Rotationsabständen von etwa 90° enthält, wobei die erste loslösbare Sperrvorrichtung gegebenenfalls umfaßt: einen von der Basisklammer (16) getragenen, durch eine Feder gespannten Sperrbolzen, eine Vielzahl von in dem Rahmenteil (18) gebildeten Aussparungen, wobei jede Aussparung (102) so angeordnet ist, daß sie bei geeigneter Ausrichtung den Sperrbolzen (94) aufnimmt und einen mit dem Sperrbolzen (94) verbundenen Auslösehebel (100) auf der Basisklammer (16) zum manuellen Zurückziehen des Sperrbolzens (94) aus der ausgerichteten Aussparung (102), so daß die Drehung des Rahmenelements (18) bezüglich der Basisklammer (16) möglich wird.

9. Klemmbefestigung nach einem der vorhergehenden Ansprüche, **dadurch gekennzeichnet, daß** die zweite loslösbare Sperrvorrichtung, umfassend einen Arretierungsmechanismus zur loslösbaren Halterung des Gerätes (12) in der gewählten Winkelpositon, wobei der Arretierungsmechanismus gegebenenfalls eine an dem oder den Rahmenarm(en) (22) angebrachte Einstellscheibe (110), die eine im allgemeinen kreisförmige Folge von Aussparungen zur Arretierung (114) besitzt und einen Befestigungsschuh (106), der in den oder die Rahmenarm(e) (122) im allgemeinen entlang der dritten Achse (24) eingreift und mit Verbindung zum Gerät (12) angeordnet ist, wobei der Befestigungsschuh (106) eine Arretierungskugel (116) zur auswechselbaren Aufnahme in einer der Aussparungen zur Arretierung (114) der Einstellscheibe (110) trägt und die Arretierungskugel (116) gegebenenfalls über die Außenseite des Befestigungsschuhs (106) übersteht.

10. Klemmbefestigung nach Anspruch 9, **dadurch gekennzeichnet, daß** jeder Arm (22) den Befestigungsschuh (106) zum Eingriff auf einer entsprechenden Seite des Gerätes enthält und die zweite loslösbare Sperrvorrichtung (116) das Gerät (12) bezüglich des entsprechenden Arms (22) loslösbar sperrt.

## Revendications

1. Dispositif de fixation pour supporter un instrument (12) dans une orientation choisie par rapport à une structure support choisie, comportant: une console de base (16) incluant des moyens pour se verrouiller sur une structure support choisie (14) s'étendant de façon générale selon un premier axe (19); un élément (18) formant cadre en U, monté, à la base du U, sur la console de base (16) pour permettre sa rotation, par rapport à la console de base (16), autour d'un second axe (20), de façon générale perpendiculaire au premier axe (19); des moyens pour connecter (100) les bras (22) de l'élément formant cadre (18) à l'instrument (12) pour permettre la rotation de l'instrument (12), par rapport aux bras (22), autour d'un troisième axe (24) qui fait un angle avec le premier (19) et avec le second (20) axes; des premiers moyens de verrouillage déverrouillables (94) pour verrouiller l'élément formant cadre (18) à l'égard de sa rotation, autour du second axe (20), par rapport à la console de base (16); des seconds moyens de verrouillage déverrouillables (116) pour verrouiller l'instrument (12), supporté par les bras (22), à l'égard de sa rotation autour du troisième axe (24), la console de base (16) présentant une surface support intérieure de console (32, 34) et une vis de fixation réglable (42) qui peut se déplacer en direction de la surface support intérieure de console (32, 34) et en s'en écartant pour, respectivement, fixer et relâcher la structure support (14) par rapport à la surface support intérieure de console (32, 34); dispositif caractérisé par le fait que le second moyen de verrouillage (116) verrouille l'instrument (12) en l'une, choisie, d'une pluralité de positions angulaires présélectionnées par rapport aux bras (22); et par le fait que des moyens (64, 66) sont prévus pour empêcher la séparation, non autorisée, de la console de base (16) d'avec la structure support, lesdits moyens (64, 66) comportant un bouton de réglage (44) supporté,avec liberté de rotation, par la console de base (16) et un mécanisme de couplage (64, 66) interconnectant le bouton de réglage (44) et la vis de fixation (42), ce par quoi la vis de fixation (42) peut se déplacer en direction de la surface support intérieure de console (32, 34) et en s'en écartant, par rotation manuelle du bouton de réglage (44).

2. Dispositif de fixation selon la revendication 1, caractérisé par le fait que la console de base (16) présente une configuration générale en forme de U définissant un canal axial (26) s'étendant selon le premier axe (19), la surface support intérieure de console (32, 34) servant à fixer et relâcher respectivement la structure support (14) par rapport à la surface support intérieure de console (32, 34), la surface support intérieure de console incluant des portions de surface de différentes configurations pour venir respectivement en prise avec des structures supports de caractéristiques géométriques différentes.

3. Dispositif de fixation selon la revendication 2, caractérisé par le fait qu'une première portion de surface définit un évidement allongé (32), de forme générale semi-cylindrique, s'étendant de façon générale parallèlement au premier axe (19), et par le fait qu'une seconde portion de surface définit une paire de rebords relativement plats (34) de chaque côté de l'évidement (32) et qu'en option une doublure souple (36) est située par dessus la première et la seconde portions de surface.

4. Dispositif de fixation selon la revendication 1, caractérisé par le fait que la console de base (16) comporte une branche support centrale (28), l'élément formant cadre (18) étant supporté, avec liberté de rotation, par la branche support centrale (28), ainsi qu'une branche support primaire (30) orientée sous un angle d'environ soixante degrés par rapport à la branche support centrale (28), une vis de fixation (42) étant supportée par la console de base (16), pour se déplacer en direction de la branche support primaire (30) et en s'en écartant, sous un angle d'environ quatre-vingt-dix degrés par rapport à la branche support primaire (30).

5. Dispositif de fixation selon l'une quelconque des revendications précédentes, caractérisé par le fait que le mécanisme de couplage est réglable pour faire varier le couple maximal de transfert entre le bouton de réglage (44) et la vis de fixation (42), et de préférence au moyen d'un outil de réglage non standard (67).

6. Dispositif de fixation selon la revendication 5, caractérisé par le fait que le mécanisme de couplage comporte une plaquette élastique (66) portée par le bouton de réglage (44), un élément formant capuchon (58) porté par la vis de fixation (42) et présentant au moins une niche (62), une bille d'entraînement (64), contrainte par la plaquette élastique (66) à venir dans la niche (62), et une vis de réglage (68), portée par le bouton de réglage (44) et venant en prise, en appui, avec l'élément élastique (66), un outil de réglage spécialisé (67) pouvant venir en prise avec la vis de réglage (68) pour faire varier la force élastique appliquée à la bille d'entraînement (64) par la plaquette élastique (66).

7. Dispositif de fixation selon l'une quelconque des revendications précédentes, caractérisé par le fait que la vis de fixation (42) comporte une extrémité intérieure (70) qui se présente de façon générale en direction de la surface support intérieure de console (32, 34) et une enveloppe souple (72) recouvrant l'extrémité intérieure (110) de la vis de fixation.

8. Dispositif de fixation selon l'une quelconque des revendications précédentes, caractérisé par le fait que les premiers moyens de verrouillage déverrouillables comportent des moyens (94, 102) pour verrouiller, avec possibilité de déverrouillage, l'élément formant cadre (18) par rapport à la console de base, à intervalles angulaires d'environ quatre vingt-dix degrés, les premiers moyens de verrouillage déverrouillables comportant, en option, une goupille (94) contrainte par un ressort et portée par la console de base (16), une pluralité, d'évidements (32) formés dans l'élément formant cadre (18), chaque évidement (32) étant positionné pour recevoir la goupille (94), lorsque l'alignement est correct, ainsi qu'une détente (100), sur la console de base (16), Connectée à la goupille (94) pour retirer manuellement la goupille (94) hors de l'évidement aligné (102) pour permettre la rotation de l'élément forment cadre (18) par rapport à la console de base (16).

9. Dispositif de fixation selon l'une des revendications précédentes, caractérisé par le fait que les seconds moyens de verrouillage déverrouillables comportent un mécanisme de crantage pour supporter, de façon déverrouillable, l'instrument (12) dans la position angulaire choisie, le mécanisme de crantage comportant en option un disque d'indexage (110) monté sur le, ou sur chaque, bras du cadre (22) et définissant une distribution de forme générale circulaire de niches de crantage (114), ainsi qu'un sabot de montage (106) venant en prise avec le, ou avec chaque, bras du cadre (122), de façon générale selon le troisième axe (24), et disposé pour être connecté à l'instrument (12), le sabot de montage (106) supportant une bille de crantage (116) reçue, de façon amovible, dans l'une des niches de crantage (114) prévues dans le disque d'indexage (110), la bille de crantage (116), étant, en option, contrainte vers l'extérieur, depuis le sabot de montage (106).

10. Dispositif de fixation selon la revendication 9, caractérisé par le fait que chacun des bras (22) comporte le sabot de montage (106) pour venir en prise avec un côté respectif de l'instrument et que les seconds moyens de verrouillage déverrouillables (116) verrouillent, de façon déverrouillable, l'instrument (12) par rapport au bras respectif (22).
